# EUROPÄISCHE PATENTSCHRIFT

(11) **EP 0 582 109 B1**
(45) Veröffentlichungstag und Bekanntmachung des Hinweises auf die Patenterteilung: **01.10.1997**
(21) Anmeldenummer: 93111266.8
(22) Anmeldetag: 14.07.1993
(51) Int. Cl.: F24D 12/02, F02G 5/04

(54) **Gerät zum Erwärmen von Wasser insb. Warmwasserheizkessel**
Apparatus for heating water, especially hot water boiler
Appareil pour chauffer de l'eau, en particulier chaudière à eau chaude

(30) Priorität: 07.08.1992 DE 4226120
(43) Veröffentlichungstag der Anmeldung: 09.02.1994
(73) Patentinhaber: Vetter, Richard, D-31226 Peine (DE)
(72) Erfinder: Vetter, Richard, D-31226 Peine (DE)
(74) Vertreter: Depmeyer, Lothar

(56) Entgegenhaltungen:
- EP-A- 0 190 616
- DE-A- 2 930 359
- NL-A- 8 201 926

## Beschreibung

Die Erfindung betrifft ein Gerät zum Erwärmen von Wasser nach dem ersten Teil des Patentanspruchs 1.

Ein Warmwasserheizkessel mit einer einen Brenner aufweisenden, oben im Gerät angeordneten Brennkammer, einem darunter befindlichen Wärmetauscher für das zu erwärmende Wasser und einem unten im Gerät befindlichen Wärmetauscher ist aus der E-PA-0 190 660 bekannt. Bei Geräten dieser Art wird der Brenner eingeschaltet, wenn die Rücklauftemperatur etwa 60° C beträgt; der Brenner wird abgeschaltet, wenn die Wassertemperatur auf etwa 72°C angestiegen ist. Der Brenner kann z.B. mit Gas oder Öl betrieben werden.

Eine andere bekannte Heizkesselanlage (NL-A-8 201 926) weist eine Verbrennungskraftmaschine auf, deren Abgase in die Brennkammer eingeleitet werden, um eine günstige Nutzung der aufgewendeten Energie zu erreichen. Die Wärmeerzeugung in der Brennkammer erfolgt dabei in erster Linie durch einen Brenner, wobei die Verbrennungskraftmaschine zum Antrieb eines Ventilators dient, der der Brennkammer Luft zuführt. Bei einem Betrieb des Brenners muß die Verbrennungskraftmaschine somit stets mitlaufen.

Bei einer weiteren bekannten Heizkesselanlage (DE-OS-29 30 359) fehlt der Brenner; er ist durch eine Verbrennungskraftmaschine ersetzt, die zum Antrieb einer Wärmepumpe dient und deren Abgase in die Brennkammer eingeleitet werden.

Bei beiden bekannten Heizungsanlagen ist die Verbrennungskraftmaschine Bestandteil der Anlage. Ein Betrieb der Heizung ohne die Verbrennungskraftmaschine ist nicht möglich.

Der Erfindung liegt dagegen die Aufgabe zugrunde, Geräte der eingangs erwähnten Art so auszubilden, daß fremde Wärmequellen von unabhängig von dem Gerät zum Erwärmen von Wasser betreibbaren Verbrennungskraftmaschinen genutzt werden können und eine Wahlmöglichkeit zwischen zwei Wärmequellen gegeben ist.

Diese Aufgabe wird bei einem Gerät der eingangs beschriebenen Art durch die Merkmale des Patentanspruchs 1 gelöst.

Unter Verbrennungskraftmaschine wird dabei z.B. ein Diesel-Motor und ein Otto-Motor verstanden, der zum Antrieb an sich beliebiger Verbraucher, vorzugsweise aber zum Antrieb eines Stromgenerators dienen soll. Die hierbei anfallenden heißen Abgase werden der Verbrennungskammer des Warmwassergerätes vorzugsweise direkt der Brennkammer z.B. über eine besondere Eintrittsöffnung zugeführt, während zusätzlich in bekannter Weise die Beheizung der Brennkammer über den Brenner geschehen kann.

Demgemäß werden die Abgase der zugeordneten Verbrennungskraftmaschine zur Wassererwärmung genutzt und die Wirkungsgrade dieser Maschinen erheblich gesteigert, wobei auch der Betrieb des Gerätes bzw. des Warmwasserheizkessels wirtschaftlicher wird.

Da das Gerät der eingangs erwähnten Ausbildung auch einen besonderen Wärmetauscher zur Vorwärmung der für den Brenner benötigten Verbrennungsluft aufweist, eröffnet die Erfindung die Möglichkeit, auch die Ansaugluft der Verbrennungskraftmaschine über den Wärmetauscher des erwähnten Gerätes zu führen, um so einmal die Verbrennungsluft für den Brenner vorzuwärmen und andererseits die Verbrennungsgase des Gerätes abzukühlen, während gleichzeitig eine günstige Beeinflussung der Ansaugluft eintreten kann. Dabei kann auch am Austritt des der Luftvorwärmung dienenden Wärmetauschers ein Schaltorgan vorgesehen werden, um die vorgewärmte Luft entweder dem Brenner, der Verbrennungskraftmaschine und ggfs beiden Verbrauchern zuführen zu können.

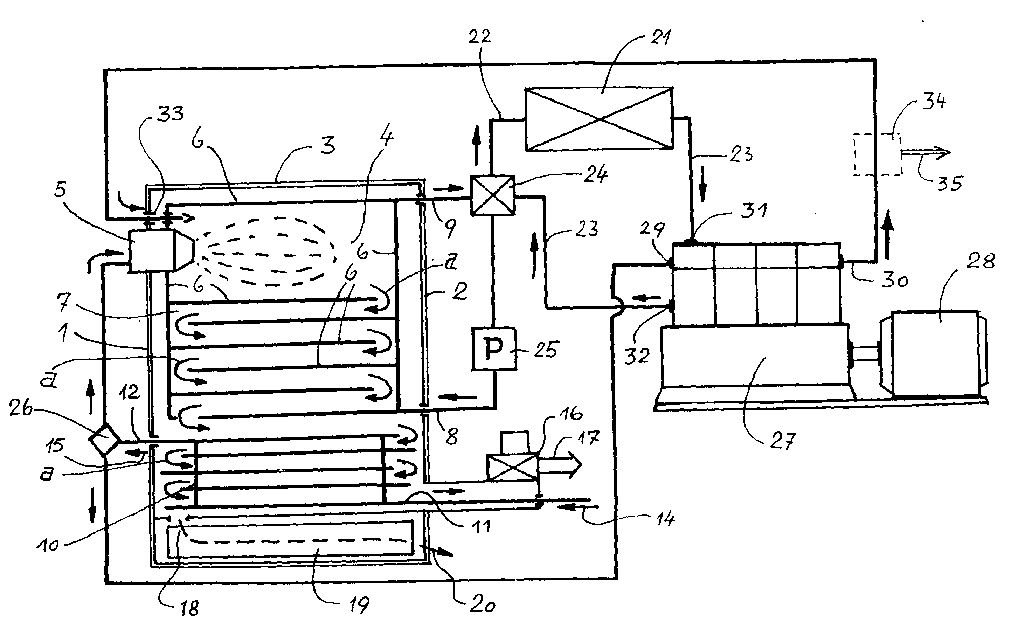

Weitere Einzelheiten der Erfindung werden anhand der Zeichnung erläutert, in der ein Ausführungsbeispiel der Erfindung dargestellt ist.

Die Abbildung zeigt einen Warmwasserheizkessel zusammen mit einem Dieselstromaggregat in schaubildlicher Darstellung.

In einem quaderförmigen Gehäuse mit Vorderwand 1, Rückwand 2 und Abdeckung 3 befindet sich oben unter der Abdeckung 3 eine Brennkammer 4 mit einem durch Öl oder Gas betriebenen Brenner 5. Sein Gebläse ist nicht dargestellt. Dieser Brennkammer 4 sindoben und seitlich Wasser führende Platten 6 zugeordnet, die zusammen mit weiteren, darunter befindlichen Platten 6 einen der Wassererwärmung dienenden Wärmetauscher 7 bilden, dessen Einlass mit 8 und dessen Auslass mit 9 bezeichnet ist. Von der Brennkammer 4 aus durchströmen die Verbrennungsgase den Wärmetauscher 7 in s-förmigen Bahnen im Sinne der Pfeile a.

Vom Wärmetauscher 7 aus gelangen die Verbrennungsgase zu einem weiteren, ebenfalls aus Platten 6 bestehenden Wärmetauscher 10 mit Einlass 11 und Auslass 12. Dem Wärmetauscher 10 wird Luft im Sinne des Pfeiles 14 zugeleitet; die Luft wird im Sinne des Pfeiles 15 abgezogen. Die im Wärmetauscher 10 ebenfalls s-förmig geführten Verbrennugsggase werden von einem Ventilator 16 angesaugt, der die Verbrennungsgase über eine Leitung 17 ins Freie treibt.

Unterhalb des Wärmetauschers 10 sammelt sich anfallendes Kondensat, das bei 18 in eine Neutralisationskammer 19 gelangt, von der aus das Wasser bei 20 anfällt.

Der Wasserverbraucher 21 z.B. in Form einer Hausanlage hat einen Vorlauf 22 und einen Rücklauf 23. Vorgesehen ist ferner ein Vierwegehahn 24, der in seiner Normalstellung keinen Beipass für den Wärmetauscher 7 bildet, also den Vorlauf 22 und den Rücklauf 23 mit den Anschlüssen 8, 9 verbindet. In den Rücklauf ist noch eine Umwälzpumpe 25 eingeschaltet.

Der Vierwegehahn 24 ist in üblicher Weise so ausgebildet, dass er bei einer Unterschreitung der Wassertemperatur von etwa 60° am Einlass 8 eine Beipassregelung bewirkt, indem er Wasser unmittelbar vom Auslass 9 dem Einlass 8 zuführt.

Die Verbrennungsgase werden im Wärmetauscher 7 etwa auf die Wassertemperatur am Einlass 8 abgekühlt. Im Wärmetauscher 10 wird den Verbrennungsgasen weitere Wärme entzogen; vor dem Ventilator 16 haben sie dann eine Temperatur von etwa 20 - 40° C. Demgemäss erfolgt auch eine Kondensation, das Kondensat wird dann - wie erwähnt - der Neutralisationskammer 19 zugeführt, in der die Schadstoffe neutralisiert werden, während das bei 20 abgezogene Wasser ohne weiteres der Kanalisation zugeleitet werden kann.

Die aus dem Wärmetauscher 10 heraustretende vorgewärmte Luft wird über einen Dreiwegehahn 26 dem Brenner 5 zugeleitet, um so eine günstige Verbrennung zu bewirken, nachdem die Luft vorher für eine weitere, nämlich die oben erwähnte Abkühlung der Verbrennungsgase vollzogen hatte.

Von besonderer Bedeutung ist, dass dem oben beschriebenen Warmwasserheizkessel ein Dieselaggregat mit einem nach dem Diesel-Prinzip wirkenden Motor 27 und angeflanschtem Stromgenerator 28 zugeordnet ist, und zwar in der Weise, dass zwischen dem Diesel 27 und dem Warmwasserheizkessel eine wärmetechnische Verbindung entsteht.

Der Motor 27 hat einen Ansaugstutzen 29 für die Luft, einen Austritt 30 für die Abgase, einen Kühlwassereintritt 31 und einen Kühlwasseraustritt 32.

Um eine Wirkverbindung im vorgenannten Sinne herzustellen, kann über den Dreiwegehahn 26 im Wärmetauscher 10 vorgewärmte Luft dem Ansaugstutzen 29 zugeleitet werden, während die bei 30 austretenden Abgase bei 33 unmittelbar in die Brennkammer 4 geleitet werden können. Darüber hinaus ist erfindungsgemäss in die Abgasleitung ein z.B. als Dreiwegehahn ausgeführter Hahn 34 eingesetzt, um wahlweise die Abgase ganz oder zum Teil vorher über die Leitung 35 abzuführen.

Es sei erwähnt, dass die Bemessung des Warmwasserheizkessels nicht nur für die der Brennerleistung entsprechende, Menge der Verbrennunsggase, sondern auch unter Berückksichtigung der vom Motor 27 zufliessenden Abgasmenge erfolgen muss.

Wenn ein ständig arbeitender Motor 27 benutzt wird, so kann die Heizleistung aus dem Warmwasserkessel durch die Abgase des Motors 27 allein erbracht werden. Ist der Wärmebedarf grösser, so wird im Regelfalle der Brenner 5 zugeschaltet. Ebenso kann bei wechselnder Motorbeanspruchung eine entsprechende Zusatzleistung des Brenners 5 in Anspruch genommen werden. Auch kann natürlich bei stehendem Motor 27 der Brenner 5 allein arbeiten.

Im obigen Falle erfolgt also eine Wirkverbindung zwischen dem Warmwasserheizkessel und dem Motor durch Ausnutzung der Abgaswärme des Motors 27 und eine Beeinflussung des Wärmetauschers 10 durch die Ansaugluft des Motors 27.

Es ist aber noch eine weitere Verknüpfung möglich, indem der Kühlwasserkreislauf des Motors 27 in Betracht gezogen wird. Es ist daher angebracht, den Kühlwasserlauf des Motors 27 in den vom Wärmetauscher 7 beeinflussten Wasserkreislauf einzubinden. Dies geschieht aufgrund der Erfindung dadurch, dass das Wasser des Rücklaufs als Kühlwasser benutzt wird bzw. die Motorwärme über das Kühlwasser in den Warmwasserprozess eingeführt wird. Zweckmässigerweise wird dazu der Rücklauf 23 des Verbrauchers 21 mit dem Kühlwassereintritt 31 des Motors 27 und dessen Kühlwasseraustritt 32 mit dem Vierwegehahn 24 verbunden. Dies bedeutet, dass der Kühlwasseraustritt des Motors 27 dazu beiträgt, die Rücklauftemperatur im Rücklauf 23 nicht unnötig absinken zu lassen und den Wärmetauscher 7 mit vergleichsweise wärmerem Wasser zu speisen ( im Vergleich zu einem Gerät ohne Motor 27 ). Der Motor 27 ist also gewissermassen ein Wärmetauscher, der mit dem Wärmetauscher 7 zusammenarbeitet und diesen unterstützt bzw. sogar ersetzen kann. Dabei erfolgt in üblicher Weise eine Steuerung über dem Vierwegehahn 24, den entsprechende Fühler und dgl. zuzuordnen sind, damit er seine Aufgabe erfüllen kann.

Da der Warmwasserheizkessel mit einer Umwälzpumpe 25 ausgestattet ist, kann sogar im Kühlwasserkreislauf des Motors 27 eine eigene Umwälzpumpe eingespart werden, da die Umwälzpumpe 25 mit dem Kühlwasserleitungssystem des Motors 27 verbunden ist.

## Patentansprüche

1. Gerät zum Erwärmen von Wasser, insb. Warmwasserheizkessel, in Verbindung mit einer Verbrennungskraftmaschine (27), mit einer einen Brenner (5) aufweisenden, oben im Gerät befindlichen Brennkammer (4), einem unterhalb der Brennkammer befindlichen Wärmetauscher (7) für das zu erwärmende Wasser und einem unten im Gerät befindlichen, von den Verbrennungsgasen durchströmten weiteren Wärmetauscher (10) zum Vorwärmen der Verbrennungsluft für den Brenner, und einer Leitung für die Abgase der Verbrennungskraftmaschine (27), wobei die Brennkammer mit den Abgasen einer Verbrennungskraftmaschine betreibbar ist, dadurch gekennzeichnet, daß in der Leitung für die Abgase der Verbrennungskraftmaschine (27) ein Dreiwegeventil (34) angeordnet ist, das zuläßt, daß die Abgase entweder in die Umgebung abgeführt werden oder der Brennkammer (4) zugeführt werden oder teilweise in die Umgebung abgeführt und teilweise der Brennkammer (4) zugeführt werden, wobei der Brenner unabhängig von der Verbrennungskraftmaschine abschaltbar ist.

2. Gerät nach Anspruch 1, dadurch gekennzeichnet, dass die durch den weiteren Wärmetauscher (10) vorgewärmte Luft ganz oder teilweise dem Ansaugstutzen (29) der Verbrennungskraftmaschine zuführbar ist.

3. Gerät nach Ansgruch 2, dadurch gekennzeichnet, dass dem Austritt des weiteren Wärmetauschers (10) ein Dreiwegehahn(26) zugeordnet ist.

4. Gerät nach Anspruch 1, dadurch gekennzeichnet, dass die Eintrittsöffnung der Abgase in die Brennkammer (4) seitlich neben dem Brenner (5) angeordnet ist.

5. Gerät nach Anspruch 1, dadurch gekennzeichnet, dass die Kraftmaschine (27) Teil eines Stromerzeugungsaggregates ist.

6. Gerät nach Anspruch 1, dadurch gekennzeichnet, dass die Durchgangsquerschnitte und Leistungen des Wärmetauschers (7) für das Wasser und die Grösse der Durchgangsquerschnitte für die Verbrennungsgase der Nennleistung des Brenners (5) und der Kraftmaschine (27) entsprechend ausgelegt sind.

7. Gerät nach Anspruch 2, dadurch gekennzeichnet, dass der der Luftvorwärmung dienende Wärmetauscher (10) der Nennleistung des Brenners (5) und der Verbrennungskraftmaschine (27) entsprechend ausgelegt ist.

8. Gerät nach Anspruch 1, dadurch gekennzeichnet, dass die Kühlwasserleitung der Verbrennungskraftmaschine (27) ganz oder zum Teil Bestandteil der vom Gerät gespeisten Leitung für das zu erwärmende Wasser ist.

9. Gerät nach Anspruch 8, dadurch gekennzeichnet, dass die Kühlwasserleitung der Verbrennungskraftmaschine (27) ganz oder zum Teil Bestandteil ihres Rücklaufs (23) ist.

10. Gerät nach Anspruch 9, dadurch gekennzeichnet, dass die für das erwärmte Wasser vorgesehene Umwälzpumpe (25) des Gerätes zum Hindurchleiten des Kühlwassers durch die Verbrennungskraftmaschine (27) dient.

11. Gerät nach Anspruch 8 mit einem Vierwegehahn zum Anschluss des Vor- und Rücklaufs für das warme Wasser, dadurch gekennzeichnet, dass die Verbrennungskraftmaschine (27) an den Vierwegehahn (24) und den Wasserverbraucher (21) angeschlossen ist.

## Claims

1. Apparatus for heating water, esp. a hot-water heating boiler, in conjunction with an internal combustion engine (27), having a combustion chamber (4) provided with a burner (5) and situated in the upper region of the apparatus, a heat exchanger (7) situated beneath the combustion chamber for the water to be heated, and an additional heat exchanger (10), which is situated in the lower region of the apparatus and is traversed by the combustion gases, for preheating the combustion air for the burner, and a pipe for the exhaust gases of the internal combustion engine (27), the combustion chamber being operable with the exhaust gases of an internal combustion engine, characterised in that a three-way valve (34) is disposed in the pipe for the exhaust gases of the internal combustion engine (27), which valve permits the exhaust gases to be either discharged into the atmosphere or supplied to the combustion chamber (4) or discharged partially into the atmosphere and partially supplied to the combustion chamber (4), the burner being able to be switched-off independently of the internal combustion engine.

2. Apparatus according to claim 1, characterised in that the air, which has been preheated by the additional heat exchanger (10), can be wholly or partially supplied to the intake connection pipe (29) of the internal combustion engine.

3. Apparatus according to claim 2, characterised in that a three-way cock (26) is associated with the outlet of the additional heat exchanger (10).

4. Apparatus according to claim 1, characterised in that the inlet aperture for the exhaust gases to enter the combustion chamber (4) is disposed laterally adjacent the burner (5).

5. Apparatus according to claim 1, characterised in that the power engine (27) is part of a power generator unit.

6. Apparatus according to claim 1, characterised in that the cross-sectional areas of passage and outputs of the heat exchanger (7) for the water and the size of the cross-sectional areas of passage for the combustion gases are adapted to correspond to the nominal output of the burner (5) and the power engine (27).

7. Apparatus according to claim 2, characterised in that the heat exchanger (10), which serves to preheat air, is adapted to correspond to the nominal output of the burner (5) and the internal combustion engine (27).

8. Apparatus according to claim 1, characterised in that the cooling-water pipe of the internal combustion engine (27) is wholly or partially a component part of the pipe, which is fed by the apparatus, for the water to be heated.

9. Apparatus according to claim 8, characterised in that the cooling-water pipe of the internal combustion engine (27) is wholly or partially a component part of its return passage (23).

10. Apparatus according to claim 9, characterised in that the circulating pump (25) of the apparatus, which pump is provided for the heated water, serves to conduct the cooling-water through the internal combustion engine (27).

11. Apparatus according to claim 8, having a four-way cock for connection with the forward and return passage for the hot water, characterised in that the internal combustion engine (27) communicates with the four-way cock (24) and the water consumer (21).

## Revendications

1. Dispositif pour chauffer de l'eau, notamment chaudière à eau chaude, reliée à une machine à combustion interne (27), comportant une chambre de combustion (4) présentant un brûleur (5) et disposée dans la partie supérieure du dispositif, un échangeur thermique (7) se trouvant en dessous destiné à l'eau devant être chauffée, et un autre échangeur thermique (10) se trouvant dans la partie inférieure du dispositif et traversé par les gaz de combustion destiné à préchauffer l'air de combustion du brûleur, et une conduite pour les gaz d'échappement de la machine à combustion interne (27), la chambre de combustion fonctionnant avec les gaz d'échappement d'une machine à combustion interne, caractérisée en ce que la conduite des gaz d'échappement de la machine à combustion interne (27) présente une soupape à trois voies (34), qui permet aux gaz d'échappement soit d'être libérés vers l'extérieur, soit d'être dirigés vers la chambre de combustion (4), ou encore d'être partiellement libérés vers l'extérieur ou partiellement dirigés vers la chambre de combustion (4), le brûleur pouvant être commandé indépendamment de la machine à combustion interne.

2. Dispositif selon la revendication 1, caractérisé en ce que l'air préchauffé par l'intermédiaire de l'autre échangeur thermique (10) peut être dirigé pour tout ou partie vers l'office d'aspiration (29) de la machine à combustion interne.

3. Dispositif selon la revendication 2, caractérisé en ce que la sortie de l'autre échangeur thermique (10) présente un robinet à trois voies (26).

4. Dispositif selon la revendication 1, caractérisé en ce que l'orifice d'entrée des gaz d'échappement à la chambre de combustion (4) est disposée sur un plan latéral à proximité du brûleur (5).

5. Dispositif selon la revendication 1, caractérisé en ce que la machine à combustion interne (27) constitue une partie d'un groupe générateur de courant.

6. Dispositif selon la revendication 1, caractérisé en ce que la section transversale de passage et le rendement de l'échangeur thermique (7) pour l'eau, ainsi que les dimensions de la section transversale de passage des gaz de combustion sont définis en fonction de la puissance nominale du brûleur (5) et de la machine à combustion interne (27).

7. Dispositif selon la revendication 2, caractérisé en ce que le rendement de l'échangeur thermique permettant de préchauffer l'air (10) est fonction de la puissance nominale du brûleur (5) et de la machine à combustion interne (27).

8. Dispositif selon la revendication 1, caractérisé en ce que la conduite d'eau de refroidissement de la machine à combustion interne (27) fait partie intègre, pour tout ou partie de la conduite alimentée par le dispositif pour l'eau devant être chauffée.

9. Dispositif selon la revendication 8, caractérisé en ce que la conduite d'eau de refroidissement de la machine à combustion interne (27) fait partie intègre, pour tout ou partie de sa conduite de retour (23).

10. Dispositif selon la revendication 9, caractérisé en ce que la pompe de circulation (25) du dispositif prévue pour l'eau chauffée sert à ce que l'eau de refroidissement circule à l'intérieur de la machine à combustion interne (27).

11. Dispositif selon la revendication 8, présentant un robinet à quatre voies devant être raccordé à une conduite d'alimentation et à une conduite de retour d'eau chaude, caractérisé en ce que la machine à combustion interne (27) est raccordée au robinet à quatre voies (24) et à l'élément consommateur (21).
